# EUROPEAN PATENT APPLICATION

(11) **EP 1 857 671 A1**
(43) Date of publication of application: **21.11.2007**
(21) Application number: 05720132.9
(22) Date of filing: 07.03.2005
(51) Int. Cl.: F03D 7/06, F03D 3/06

(54) **BLADE FOR VERTICAL SHAFT WINDMILL AND LIFT TYPE VERTICAL SHAFT WINDMILL**

(71) Applicant: Intellectual Property Bank Corp., Tokyo 105-0001 (JP)
(72) Inventor: YOKOI, Tadashi, Chiba 2610011 (JP)
(74) Representative: Rees, Alexander Ellison
(86) International application number: PCT/JP2005/003860
(87) International publication number: WO 2006/095396

(57) **Abstract**

[OBJECT] To provide a blade for a vertical axis wind turbine and a lift type vertical axis wind turbine having the blade, which can easily suppress excessive increase of the rotation rate of the wind turbine with a simple mechanical structure when increasing the rotation rate of the wind turbine to a prescribed value or more.

[SOLUTION] A blade 1 is provided with an air brake 2 and a shaft bearing 3 disposed at a position nearer the rear edge with respect to the gravity center of the air brake 2. The air brake 2 is mounted rotatably on the blade 1 through the shaft bearing 3. Inside the front portion of the air brake 2, a substantially S-shaped spring backing plate 6 is mounted. The spring backing plate 6 largely protrudes frontward out of the air brake 2 and urged by spring members 7 serving as a protrusion forbidding member disposed nearer the front portion of the windsail chamber 12. When increasing the rotation rate over a prescribed value, the front edge of the air brake 2 protrudes out of the wing surface by a centrifugal force while the rear edge of the air brake 2 retracts inward from the wing surface, thus to produce air resistance, resulting in suppressing increase of the rotation rate of the wind turbine.

## Description

### [TECHNICAL FIELD]

This invention relates to a blade for a vertical axis wind turbine, which is disposed on a rotary shaft of a vertical axis wind turbine through a support arm so as to produce a lifting force with a head wind to rotate the rotary shaft by the lifting force and further relates to a lift type vertical axis wind turbine having the blade. The specific type of wind turbine associated with the invention appertains to a straight wing-type Darius wind turbine, Darius-type wind turbine, and vertical axis wind turbine with the components of these wind turbines.

### [BACKGROUND ART]

As a wind turbine for converting wind power energy into motive energy with relatively high energy conversion efficiency, there have been conventionally known a Darius-type wind turbine having a horizontal axis propeller-type wind turbine and a vertical rotational shaft, and a straight wing-type Darius wind turbine. The horizontal axis propeller-type wind turbine has been used for most of large-scaled wind turbines of recent years. The Darius-type wind turbine enjoys an advantage of superior performance capable of being brought out equally in all directions of north, south, east and west without any need for follow-up control to the wind, despite its low-startability in weak wind. Thus, the Darius-type wind turbine is expected to be further developed and applied as a wind turbine of small scale adaptable to use in a city or living area.

In the wind turbines such as the Darius-type wind turbine and straight wing-type Darius wind turbine, a blade rotates about a rotary shaft at a high circumferential speed as the wind speed increases. The wind turbines of this type requires a braking device to stop the rotation of the blades in order to ensure the safety of the wind turbine in strong winds such as of a typhoon, because it is desirable that the wind turbine is stopped so as to be operated safely before it rotates at high-speeds at which it is impossible to control the wind turbine.

Specifically in the straight wing-type Darius wind turbine, the blade rotates in its vertical state about the vertical rotary shaft at high speeds, thereby producing a bending moment around the stationary center part of the blade due to a centrifugal force of the rotating blade. In order to prevent the breakage of the blade caused by the bending moment, any measures for stopping the wind turbine when the wind reaches a prescribed wind velocity or the wind turbine reaches a prescribed rotation rate or an alternative solution must be taken. In the state of completely stopping the wind turbine, the wind turbine produces zero output, so that even a part of large potential energy of the strong wind can in no way be utilized.

There has been proposed a wind turbine in that a control member is disposed on a wing surface so that air resistance can be produced by opening the control member to reduce a lifting force so as to control the rotation number of the wind turbine (cf. Patent Literature 1).
[Patent Literature 1] Japanese Patent Application Publication SHO 54-17439A

### [DISCLOSURE OF INVENTION]

### [PROBLEMS TO BE SOLVED BY THE INVENTION]

However, the spoiler of the wind turbine described in the aforementioned publication (Patent Literature 1) is not specified at all about what operating parameters are used for opening and closing the control member and on how to be mounted within a very limited space in the blade. Thus, the proposed technique has neither real substance nor technical viability.

There may be thought to apply an electromagnetic brake to an output shaft of the wind turbine for reducing the rotation rate of the blade in order to continue the operation of the wind turbine in a certain degree of strong wind. However, such an idea of using the electromagnetic brake disadvantageously requires electric power for operating the wind turbine on a steady basis and a receiving load of an electric current generated resultantly, while suffering from a disadvantage of an excessive torque remaining on the output shaft of the wind turbine. As an alternative, a mechanical brake may be conceived for reducing the rotation rate of the blade, but realistically, there is no effective solution to the daunting problems of heat produced in a friction disc and limited durability of the friction surface.

Accordingly, the present invention is made to solve the aforementioned problems and seeks to provide a blade for a vertical axis wind turbine and further a lift type vertical axis wind turbine having the aforementioned blade, which wind turbine can continue more than some degree of electric power generation by reducing the rotation of the wind turbine without stopping the wind turbine and accumulating heat energy by using only a simple mechanical means having high reliability and making use of a centrifugal action, which is constructed so as to have the blade protruding automatically from a wing surface by the action of a centrifugal force generated when increasing the rotation rate of the blade to a prescribed value or more, thus to cause air resistance to strongly suppress increase of the rotation rate.

### [MEANS OF SOLVING THE PROBLEMS]

To solve the above problems according to the present invention as set forth in Claim 1, there is provided a blade for a vertical axis wind turbine, which blade is disposed on a rotary shaft of the vertical axis wind turbine through a support arm to produce a lifting force with wind to rotate the rotary shaft by the lifting force, which comprises an air brake disposed on a wing surface far away from the aforesaid rotary shaft and constructed to have the blade protruding automatically from the wing surface by a centrifugal force generated when increasing the rotation rate of the blade to a prescribed value or more, thus to cause air resistance and disturb the flow of air to decrease the lifting force caused on the wing surface, thereby to suppress increase of the rotation rate, and a protrusion forbidding member for keeping the air brake in its closing state when the centrifugal force imposed on the air brake is equal to a prescribed value or less.

According to the blade, it is possible to efficiently control the rotation rate with such a simple structure by having the air brake automatically protruding to produce air resistance in accordance with the wind speed when the wind speed exceeds a fixed value.

As set forth in Claim 2, the present invention is featured in that the outer surface of the aforesaid air brake constitutes a part of a regular airfoil formation of the aforesaid blade in the closed state of the air brake.

According to the invention, the air brake functions as a part of the blade in its closed state (during electric generation), so that decrease in power generation capacity can be prevented.

As set forth in Claim 3, the blade for a vertical axis wind turbine described in Claim 1 of to the present invention is featured in that a shaft fitting portion is disposed at a position nearer the rear edge with respect to the gravity center of the air brake in parallel with the longitudinal direction of the blade, and the aforesaid air brake is attached rotatably to the blade through the shaft fitting portion, the aforementioned blade is provided to have the end portion of the air brake on the side nearer the front edge of the blade protruding from the wing surface by centrifugal force occurring at high-speed rotation, thus to suppress increase of the rotation rate by air resistance produced on the front edge side of the air brake and decrease in the lifting force produced on the blade by turbulence in air flow, and the aforesaid protrusion forbidding member maintains the outer surface of the air brake in the same plane as the outer surface of the blade by permitting a prohibitive power for suppressing the protrusion of the air brake to surpass the centrifugal force when the centrifugal force imparted on the air brake turns into below a prescribed value.
Accordingly, a brake force is produced by the air resistance produced on the front edge side of the air brake and the turbulence in air flow when activating the brake.

As set forth in Claim 4, the present invention is featured in that a shaft fitting portion is disposed at a position nearer the rear edge with respect to the gravity center of the air brake and near the geometrical center of the air brake in parallel with the longitudinal direction of the blade, and the aforesaid air brake is attached rotatably to the blade through the shaft fitting portion, the aforementioned blade is provided to have the end portion of the air brake on the side nearer the front edge of the blade protruding from the wing surface by centrifugal force occurring at high-speed rotation and simultaneously the end portion of the air brake on the side near the rear edge of the blade retracting inward from the wing surface, thus to suppress increase of the rotation rate by a first air resistance and turbulence in the air flow produced on the front edge side of the brake and a second air resistance and turbulence in the air flow produced on a portion exposing the air flow formed by a hollow by the retracted air brake on the cross section of the blade adjacent to the rear edge of the air brake, and the aforesaid protrusion forbidding member maintains the whole outer surface of the air brake in the same plane as the outer surface of the blade by permitting a prohibitive power for suppressing the protrusion of the air brake to surpass the centrifugal force when the centrifugal force imparted on the air brake turns into below a prescribed value.
Accordingly, a brake force is doubled by the effect of the air resistances occurring on the two front and rear portions of the blade and turbulence in the air flow when activating the brake.

The lift type vertical axis wind turbine as described in Claim 5 is featured by comprising the aforementioned blade for the vertical axis wind turbine.

### [EFFECT OF THE INVENTION]

According to the invention, when the rotation rate of the wind turbine increases close to a limit value prescribed from a standpoint of mechanical safety while the wind blows up while the centrifugal force imposed on the air brake exceeds a fixed value, the air brake protrudes from the wing surface (radially outwardly) against a drag force brought about by an air brake retainer to produce large air resistance and a normal lifting force produced intrinsically on the blade is diminished by turbulence in air flow, so that increase of the rotation rate can easily be suppressed by using a simple structure.

### [BRIEF DESCRIPTION OF THE DRAWINGS]

[FIG. 1] Cross section of a best mode for carrying out a blade for a vertical axis wind turbine according to the present invention.
[FIG. 2] Partially broken perspective view showing one example of a wind turbine to which the blade for the vertical axis wind turbine according to the invention is applied
[FIG 3] Partially broken side view of the blade 1 viewed in the direction of the arrow X in FIG. 1.
[FIG 4] View showing the wind turbine viewed from the top, with the air brake 2 protruding.
[FIG. 5] Cross section taken along line A-A of the blade 1 viewed from the top, with the air brake 2 protruding.

### [EXPLANATION OF REFERENCE NUMERALS]

- 1: Blade
- 2: pneumatic brake
- 3: shaft bearing
- 4: shaft
- 6: spring backing plate
- 7: spring member
- 8: stopper
- 9: fixing screw
- 12: windsail chamber
- 13: back surface
- 14: bearing seat

### [BEST MODE FOR CARRYING OUT THE INVENTION]

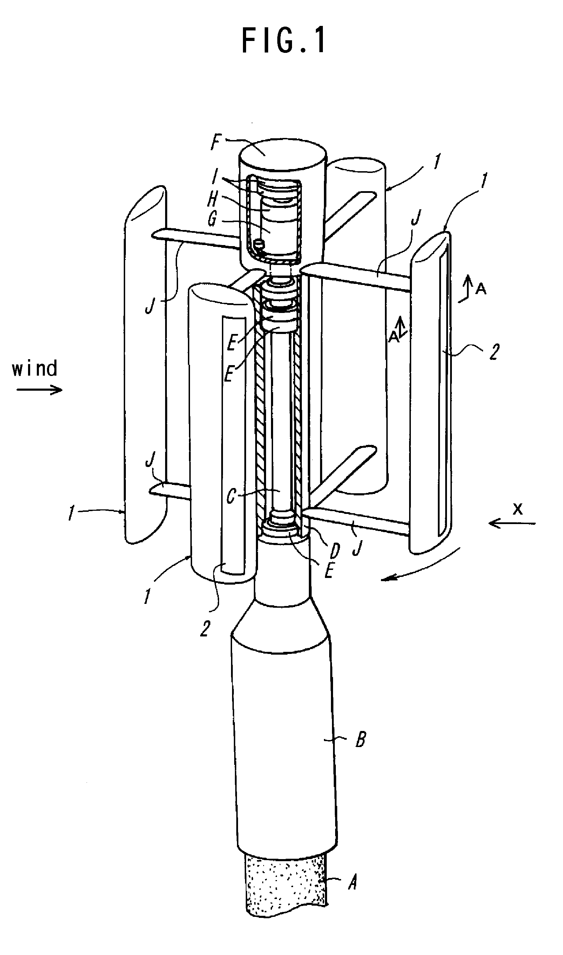

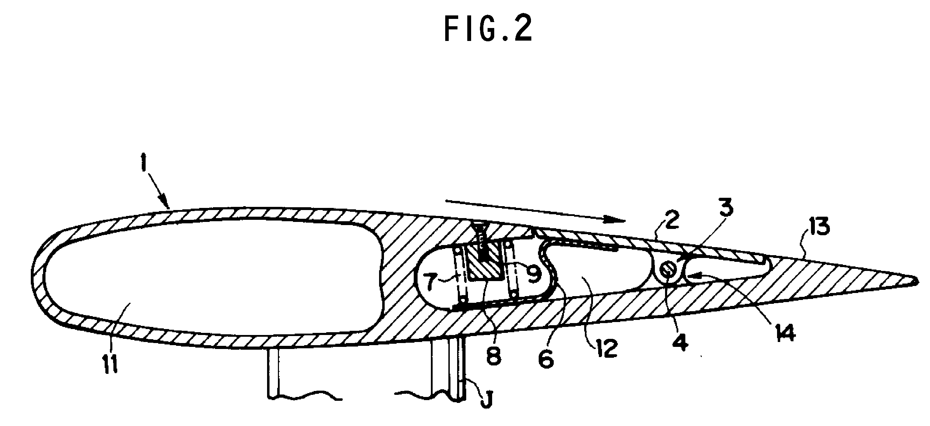

The best mode for carrying out a blade for a vertical axis wind turbine according to the present invention will be described with reference to the accompanying drawings. FIG 1 is a partially broken perspective view showing a straight wing-type vertical axis wind turbine using the blade for the vertical axis wind turbine according to the invention, and FIG 2 is a cross sectional view taken along line A-A of the best mode for carrying out the blade for the vertical axis wind turbine according to the invention.

As shown in FIG 1, the straight wing-type vertical axis wind turbine comprises a cylindrical fitting base B attached to a setting support A like a pole such as an electric pole, a rod-like fixing shaft C fixed on the fitting base B and having a vertical axis line, a shaft bearing E attached to the outer periphery of the fixing shaft C, a cylindrical outer sleeve D attached rotatably around the fixing shaft to the outer periphery of the shaft bearing E, a cylindrical torque transmission tube F rotatable with the outer sleeve D, a coupling I for transmitting the output torque of the torque transmission tube F, and an electric generator G

In the straight wing-type vertical axis wind turbine, the electric generator G mounted on the top of the fixing shaft C is housed within the torque transmission tube F, so that a rotational torque of the torque transmission tube F is transmitted to the input shaft of the electric generator G through a speed-up device H and the coupling I.

Blade elements 1 of the blade are arranged equiangularly around the rotary shaft of the blade and fixedly attached to the outer sleeve D through struts J. The outer sleeve D is connected to the torque transmission tube F so as to transmit the rotational torque to the speed-up device and the electric generator. In the meanwhile, the number of the blade elements 1 is not specifically limited, but usually two, three, four or five blade elements may be suitably used.

This invention does not contemplate imposing any limitation on the mechanism for transmission of rotational movement of the blade to the electric generator, but there may be widely adopted a structure in which the blade elements 1 are connected to the rotary shaft through the struts J and an extension portion extending from the rotary shaft is supported by two or more shaft bearings attached to the outer periphery of the rotary shaft. In such a case, the electric generator may be disposed on the end portion of the extension portion of the rotary shaft.

As shown in FIG 2, the blade 1 is formed in a hollow shape with an inner void to reduce its weight. The rear side void 11 serves as a windsail chamber 12 for accepting the air entering thereinto as described later.

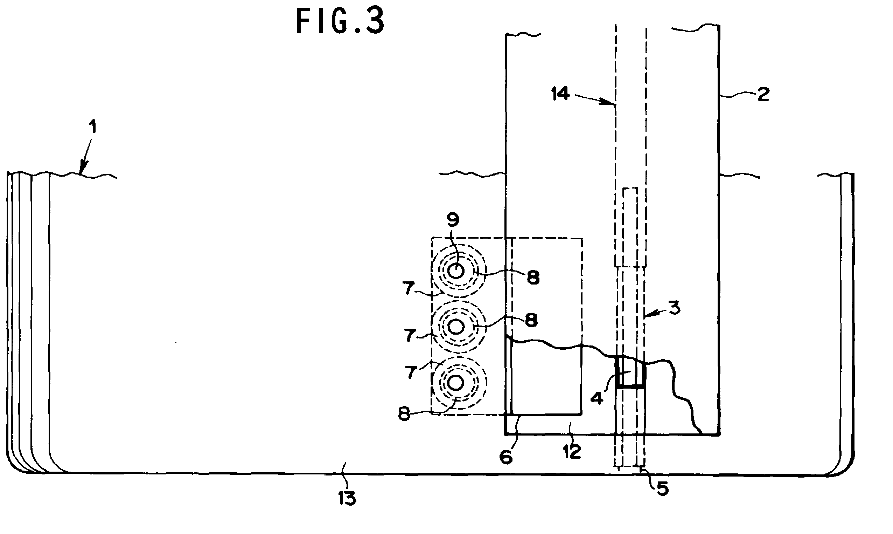

The windsail chamber 12 is open to a back surface 13 to define an opening surface, which is a wing surface far from the rotary shaft, so as to cover the air brake 2 with the opening surface. FIG 3 is a partially cutaway side view of the blade 1 viewed in the direction of the arrow X in FIG 1. As shown in FIG 3, a bearing seat 14 extending in the longitudinal direction of the blade is mounted within the windsail chamber 12.

As shown in FIG 2, the air brake 2 is formed like a slightly curved plate constituting a part of the back surface 13 of the blade 1. The shaft bearing 3 as a shaft fitting portion is positioned roughly in the center of the air brake (situated nearer the rear edge in relation to the gravity center of the air brake 2) in parallel with the longitudinal direction of the blade 1. The air brake 2 is supported by a bearing seat 14 of the blade 1 through the shaft bearing 3 rotatably about the shaft 4 so as to permit the front edge of the air brake to protrude out of the curved surface of the blade 1.

Inside the front portion of the air brake 2, a substantially S-shaped spring backing plate 6 is mounted. The spring backing plate 6 largely protrudes frontward out of the air brake 2 and urged by spring members 7 serving as a protrusion forbidding member disposed nearer the front portion of the windsail chamber 12.

Each spring member 7 is formed of a coil spring and held in its wound state around a pillar-like stopper 8 projected from the windsail chamber 12. The spring member 7 urges to tumble the air 2 through the spring backing plate 6.

A protrusion forbidding force imparted on the air brake is determined so as to be balanced with the centrifugal force acted on the air brake 2 when the rotation number of the wind turbine reaches a prescribed value of rotation number. Thus, the air brake 2 is not activated until the rotation rate of the wind turbine reaches the prescribed value, but when it exceeds the prescribed value, the air brake moves outward radially to produce air resistance, consequently to suppress the rotation number. The aforesaid prescribed value is adequately determined in compliance with the strength design of the entire wind turbine including the strength of the blade 1.

The spring backing plate 6 comes into collision with the stoppers 8 when protruding the air brake 2 and retained detachably with fixing screws 9 pierced through from the back surface 13.

Each stopper 8 serves to restrict the compression length of the spring member 7, consequently to eliminate risk of breakdown of the material of the spring member 7 due to an intolerable pressure imparted thereon by the air brake 2.

With the structure as described above, the air brake 2 is maintained at a normal position (in its closed state) by the forbidding force of the spring member 7 under normal conditions (when the rotation rate of the wind turbine is below the prescribed value), and the outer surface of the air brake 2 is maintained in the same plane as the outer surface of the blade 1. At that time, the air brake 2 serves as one part of the wing surface to produce an intended lifting force.

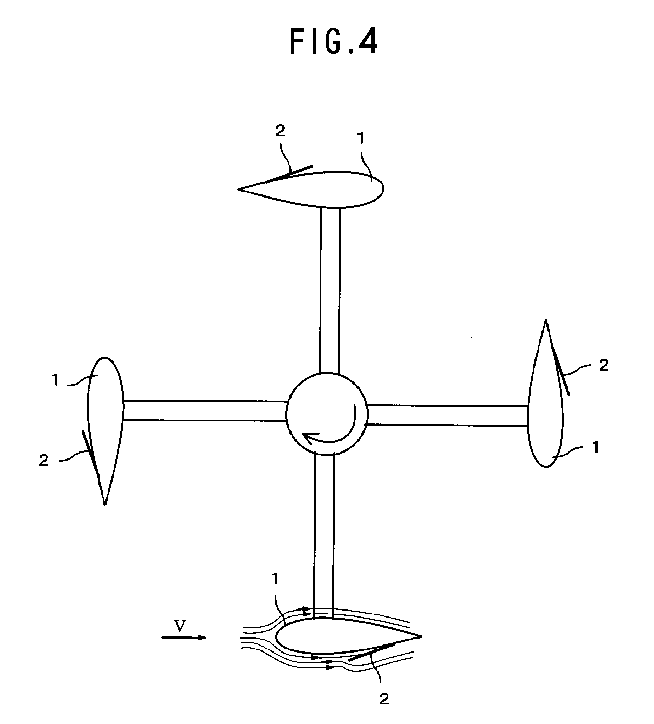

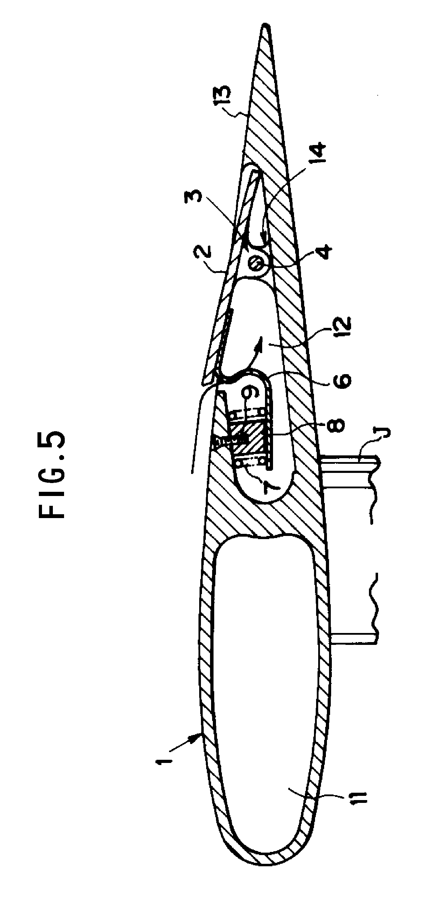

As the rotation rate of the wind turbine increases with increased wind velocity, the air brake 2 moves outward radially against the protrusion forbidding force of the spring member 7 by the action of a centrifugal force over the prescribed value. FIG 4 shows the air brake 2 protruding outward when viewed from the top of the wind turbine. In FIG 4, the flow of air around one blade element 1 is depicted. FIG 5 is a cross sectional view taken along line A-A of the blade having the protruding air brake 2.

The protruding air brake 2 produces large air resistance relative to a head wind (wind velocity V) and disturb the flow of air to diminish a lifting force produced intrinsically on the blade, consequently to automatically regulate the rotation rate of the wind turbine, as shown in FIG 4. The air brake 2 comes into collision with the stopper 8 when protruding as shown in FIG 5, so that the protrusion of the air brake 2 can be restricted to a certain range and excessive deformation of the spring member 7 can be prevented.

Hence, the invention renders complete stopping of the wind turbine unnecessary even in strong winds, so that generation of electricity above a certain level can be continuously assured. Furthermore, since the invention makes use of the forbidding force of the spring member 7 and the centrifugal force imposed on the air brake 2, there is no need for additional power for actuating the air brake 2, thus to enable control of the rotation number with a simple structure.

Meanwhile, by forming the stopper 8 of elastic material, the impact of the collision of the spring backing plate with the stopper 8 can be weakened by a synergistic effect of a combination of the elastic stopper 8 and elasticity brought about by the S-shaped configuration of the stopper 8.

The blade may be reinforced by extending a rib to the inner edge within the windsail chamber 12 of the air brake 2.

Further, the air brake 2 has about the same length as the blade 1 in the aforementioned embodiment, but the invention is not to be considered limited to this structure. The air brake may be made short or provided only on some of the blade elements so as to arbitrarily control the degree of incidence of the air brake.

## Claims

1. A blade for a vertical axis wind turbine, said blade being disposed on a rotary shaft of the vertical axis wind turbine through a support arm to produce a lifting force with wind to rotate said rotary shaft by the lifting force, which comprises:
an air brake disposed on a wing surface far away from said rotary shaft and constructed to have the blade protruding automatically from the wing surface by a centrifugal force generated when increasing the rotation rate of the blade to a prescribed value or more, thus to cause air resistance and disturb the flow of air to decrease the lifting force caused on the wing surface, thereby to suppress increase of the rotation rate, and
a protrusion forbidding member for keeping the air brake in its closing state when the centrifugal force imposed on the air brake is equal to a prescribed value or less.

2. The blade for the vertical axis wind turbine as set forth in Claim 1, wherein a shaft fitting portion is disposed at a position nearer the rear edge with respect to the gravity center of said air brake in parallel with the longitudinal direction of the blade, said air brake is attached rotatably to the blade through said shaft fitting portion,
said air brake has an end portion on the side nearer the front edge of the blade protruding from the wing surface by centrifugal force occurring at high-speed rotation, thus to suppress increase of the rotation rate by air resistance produced on the front edge side of the air brake and decrease in the lifting force produced on the blade by turbulence in air flow, and
said protrusion forbidding member maintains the outer surface of said air brake in the same plane as the outer surface of the blade by permitting a prohibitive power for suppressing the protrusion of the air brake to surpass the centrifugal force when the centrifugal force imparted on said air brake turns into a prescribed value or less.

3. The blade for the vertical wind turbine as set forth in Claim 1, wherein a shaft fitting portion is disposed at a position nearer the rear edge with respect to the gravity center of said air brake and near the geometrical center of the air brake in parallel with the longitudinal direction of the blade, and said air brake is attached rotatably to said blade through the shaft fitting portion,
said air brake has an end portion on the side nearer the front edge of the blade protruding from the wing surface by centrifugal force occurring at high-speed rotation and simultaneously the end portion of the air brake on the side near the rear edge of the blade retracting inward from the wing surface, thus to suppress increase of the rotation rate by a first air resistance and turbulence in the air flow produced on the front edge side of the brake and a second air resistance and turbulence in the air flow produced on a portion exposing the air flow formed by a hollow by the retracted air brake on the cross section of the blade adjacent to the rear edge of the air brake, and
said protrusion forbidding member maintains the whole outer surface of said air brake in the same plane as the outer surface of the blade by permitting a prohibitive power for suppressing the protrusion of the air brake to surpass the centrifugal force when the centrifugal force imparted on the air brake turns into a prescribed value or less.

4. The blade for the vertical axis wind turbine as set forth in Claim 1, wherein the outer surface of said air brake constitutes a part of a regular airfoil formation of said blade in the closed state of the air brake.

5. The blade for the vertical wind turbine as set forth in Claim 4, wherein a shaft fitting portion is disposed at a position nearer the rear edge with respect to the gravity center of said air brake in parallel with the longitudinal direction of the blade, said air brake is attached rotatably to the blade through said shaft fitting portion,
said air brake has an end portion on the side nearer the front edge of the blade protruding from the wing surface by centrifugal force occurring at high-speed rotation, thus to suppress increase of the rotation rate by air resistance produced on the front edge side of the air brake and decrease in the lifting force produced on the blade by turbulence in air flow, and
said protrusion forbidding member maintains the outer surface of the air brake in the same plane as the outer surface of the blade by permitting a prohibitive power for suppressing the protrusion of the air brake to surpass the centrifugal force when the centrifugal force imparted on the air brake turns into a prescribed value or less.

6. The blade for the vertical wind turbine as set forth in Claim 4, wherein a shaft fitting portion is disposed at a position nearer the rear edge with respect to the gravity center of the air brake and near the geometrical center of the air brake in parallel with the longitudinal direction of the blade, and said air brake is attached rotatably to the blade through the shaft fitting portion,
said air brake has an end portion on the side nearer the front edge of the blade protruding from the wing surface by centrifugal force occurring at high-speed rotation and simultaneously the end portion of the air brake on the side near the rear edge of the blade retracting inward from the wing surface, thus to suppress increase of the rotation rate by a first air resistance and turbulence in the air flow produced on the front edge side of the brake and a second air resistance and turbulence in the air flow produced on a portion exposing the air flow formed by a hollow by the retracted air brake on the cross section of the blade adjacent to the rear edge of the air brake, and
said protrusion forbidding member maintains the whole outer surface of the air brake in the same plane as the outer surface of the blade by permitting a prohibitive power for suppressing the protrusion of the air brake to surpass the centrifugal force when the centrifugal force imparted on the air brake turns into a prescribed value or less.

7. A lift type vertical axis wind turbine comprising said blade for the vertical wind turbine as mentioned in any of Claims 1 to 6.

## Amended claims

### Amended claims under Art. 19.1 PCT

**1.** amended). A blade for a vertical axis wind turbine, said blade being disposed on a rotary shaft of the vertical axis wind turbine through a support arm to produce a lifting force with wind to rotate the rotary shaft by the lifting force, which comprises:
an air brake having a hollow between an abaxial wing wall and a ventral wing wall of the blade far away from said rotary shaft and disposed at a portion where the wing wall partially removed from the abaxial wing wall resides to have the end portion of the air brake on the side nearer the front edge of the blade automatically protruding from said wing wall by centrifugal force occurring at high-speed rotation and simultaneously the end portion of the air brake on the side near the rear edge of the blade retracting inward from the wing wall, and
a protrusion forbidding member housed within said hollow to keep said air brake in its closing state when the centrifugal force imposed on said air brake is equal to a prescribed value or less.

**2.** The blade for the vertical axis wind turbine as set forth in Claim 1, wherein a shaft fitting portion is disposed at a position nearer the rear edge with respect to the gravity center of said air brake in parallel with the longitudinal direction of the blade, said air brake is attached rotatably to the blade through said shaft fitting portion,
said air brake has an end portion on the side nearer the front edge of the blade protruding from the wing surface by centrifugal force occurring at high-speed rotation, thus to suppress increase of the rotation rate by air resistance produced on the front edge side of the air brake and decrease in the lifting force produced on the blade by turbulence in air flow, and
said protrusion forbidding member maintains the outer surface of said air brake in the same plane as the outer surface of the blade by permitting a prohibitive power for suppressing the protrusion of the air brake to surpass the centrifugal force when the centrifugal force imparted on said air brake turns into a prescribed value or less.

**3.** amended). The blade for the vertical axis wind turbine as set forth in Claim 1, wherein a shaft fitting portion is disposed at a position nearer the rear edge with respect to the gravity center of said air brake and near the geometrical center of the air brake in parallel with the longitudinal direction of the blade, and said air brake is attached rotatably to said blade through the shaft fitting portion,
said air brake has an end portion on the side nearer the front edge of the blade protruding from the wing surface by centrifugal force occurring at high-speed rotation and simultaneously the end portion of the air brake on the side near the rear edge of the blade retracting inward from the wing surface, thus to suppress increase of the rotation rate by a first air resistance and turbulence in the air flow produced on the front edge side of the brake and a second air resistance and turbulence in the air flow produced on a portion exposing the air flow formed by a hollow by the retracted air brake on the cross section of the blade adjacent to the rear edge of the air brake, and
said protrusion forbidding member maintains the whole outer surface of said air brake in the same plane as the outer surface of the blade by permitting a prohibitive power for suppressing the protrusion of the air brake to surpass the centrifugal force when the centrifugal force imparted on the air brake turns into a prescribed value or less.

**4.** The blade for the vertical axis wind turbine as set forth in Claim 1, wherein the outer surface of said air brake constitutes a part of a regular airfoil formation of said blade in the closed state of the air brake.

**5.** The blade for the vertical axis wind turbine as set forth in Claim 4, wherein a shaft fitting portion is disposed at a position nearer the rear edge with respect to the gravity center of said air brake in parallel with the longitudinal direction of the blade, said air brake is attached rotatably to the blade through said shaft fitting portion,
said air brake has an end portion on the side nearer the front edge of the blade protruding from the wing surface by centrifugal force occurring at high-speed rotation, thus to suppress increase of the rotation rate by air resistance produced on the front edge side of the air brake and decrease in the lifting force produced on the blade by turbulence in air flow, and
said protrusion forbidding member maintains the outer surface of the air brake in the same plane as the outer surface of the blade by permitting a prohibitive power for suppressing the protrusion of the air brake to surpass the centrifugal force when the centrifugal force imparted on the air brake turns into a prescribed value or less.

**6.** amended). The blade for the vertical axis wind turbine as set forth in Claim 4, wherein a shaft fitting portion is disposed at a position nearer the rear edge with respect to the gravity center of the air brake and near the geometrical center of the air brake in parallel with the longitudinal direction of the blade, and said air brake is attached rotatably to the blade through the shaft fitting portion,
said air brake has an end portion on the side nearer the front edge of the blade protruding from the wing surface by centrifugal force occurring at high-speed rotation and simultaneously the end portion of the air brake on the side near the rear edge of the blade retracting inward from the wing surface, thus to suppress increase of the rotation rate by a first air resistance and turbulence in the air flow produced on the front edge side of the brake and a second air resistance and turbulence in the air flow produced on a portion exposing the air flow formed by a hollow by the retracted air
brake on the cross section of the blade adjacent to the rear edge of the air brake, and
said protrusion forbidding member maintains the whole outer surface of the air brake in the same plane as the outer surface of the blade by permitting a prohibitive power for suppressing the protrusion of the air brake to surpass the centrifugal force when the centrifugal force imparted on the air brake turns into a prescribed value or less.

**7.** amended). A lift type vertical axis wind turbine comprising said blade for the vertical axis wind turbine as mentioned in any of Claims 1 to 6.

Statement under Art. 19.1 PCT
In Claim 1, the phrase "an air brake disposed on a wing surface far away from said rotary shaft and constructed" is amended to "an air brake having a hollow between an abaxial wing wall and a ventral wing wall of the blade far away from said rotary shaft and disposed at a portion where the wing wall partially removed from the abaxial wing wall resides so as", and the phrase "have the blade protruding automatically from the wing surface" is amended to "have the end portion of the air brake on the side nearer the front edge of the blade automatically protruding from said wing wall". Further, the phrase "a protrusion forbidding member for keeping" is amended to "a protrusion forbidding member housed within said hollow to keep". These limitations are supported by the descriptions in paragraphs [0024], [0025] and [0026] and FIG 2.

In Claims 3, 6 and 7, the wording "blade for a vertical wind turbine" is a clerical error, and should rightly be "blade for a vertical axis wind turbine". Thus, the amendment is made to correct the clerical error in these claims.

Claims 2, 4 and 5 remain unchanged.

The cited reference pertains to an air brake mounted on the outer surface of a wing wall, but makes no mention nor suggestion of "an air brake which has a hollow between an abaxial wing wall and a ventral wing wall of the blade far away from said rotary shaft and is disposed at a portion where the wing wall partially removed from the abaxial wing wall resides so as to have the end portion of the air brake on the side nearer the front edge of the blade automatically protruding from said wing wall by centrifugal force" and "a protrusion forbidding member, which is housed within said hollow to keep said air brake in its closing state when the centrifugal force imposed on said air brake is equal to a prescribed value or less".

Therefore, the present invention as claimed in the amended claims is believed to have an inventive step and novelty over the cited reference.
